# EUROPEAN PATENT APPLICATION

(11) **EP 1 100 007 A2**
(43) Date of publication of application: **16.05.2001**
(21) Application number: 00306797.2
(22) Date of filing: 09.08.2000
(51) Int. Cl.: G06F 9/44

(54) **A method of optimizing a design project**

(30) Priority: 13.08.1999 US 373547
(71) Applicant: GENERAL ELECTRIC COMPANY, Schenectady, NY 12345 (US)
(72) Inventor: Borchardt, Gary Irvin Jr., Sunnyvale, CA 94087 (US); Delvin, Sandra A., San Jose, California 95120 (US); McIntyre, Terry R., Morgan Hill, California 95037 (US)
(74) Representative: Pedder, James Cuthbert

(57) **Abstract**

A method of optimizing a design concept from proposed multiple concepts for a project having initially identified technical issues (14). Each concept includes generalized technical specifications addressing the technical issues and specific design features (15) meeting overall project specifications. For each design concept, a critical-to-quality value is determined for each technical specification addressing the technical issue by weighting in importance each technical issue and each technical specification. The weightings are combined to ascertain the relative importance of each technical specification in meeting the initially identified project technical issues. For each design concept, a technical merit value for each design feature addressing each technical specification is determined by combining the critical-to-quality value for each technical specification and the weighting of importance of each design feature to ascertain the relative importance of each design feature in meeting the technical specifications. The technical merit values are summed, affording a measure of how well the design features meet the overall project technical issues. The summed technical merit values are compared to derive an optimized design concept.

## Description

The present invention relates to methodology for optimizing a design project by identifying specific characteristics and levels of design specifications from general requirements, and then evaluating features for meeting those characteristics and particularly for selecting an optimized design concept from a plurality of proposed design concepts.

In many design projects, there are a number of initially identified and often very general design requirements which must be met by designing and providing proposed technical specifications and design features to meet those requirements. Oftentimes, design specifications and features are proposed to meet those initial design requirements without assessing their effect on other aspects of the initial design requirements, as well as others of the proposed technical features and designs. Design specifications and features proposed to meet initial design requirements may also have a detrimental effect on other proposed design specifications and features proposed to meet other design requirements. In complex technical designs, such as upgrades for a nuclear power plant, there are sometimes conflicting design requirements and proposed design specifications and features meeting those requirements, the relative importance of which have not heretofore been assessed in terms of optimizing those criteria to select the best design concept for the successful completion of the overall project. Consequently, there has developed a need for an evaluation methodology that organizes relevant information and provides a framework for creating product development criteria to facilitate better decision making, satisfy design requirements, i.e., project or customer needs and enable selection of an optimum design concept from multiple proposals.

In accordance with a preferred embodiment of the present invention, there is provided a novel and improved methodology for understanding the uncertainties involved in product design, and translating that understanding into a systematic way of documenting and breaking down competing design requirements into manageable and actionable detail. Particularly, the present invention employs quality functional deployment tools for mapping the relative importance of the initially identified general design requirements (sometimes referred to herein as technical issues) into specific technical specifications for meeting those requirements and using those importance rankings to further rank in relative importance lower level design features for meeting those technical specifications to arrive at a relative ranking between various competing design concepts for meeting the initially identified design requirements. In addition, project implementation costs are ranked for the design features for each concept. In an application of this methodology, for example, to a nuclear plant upgrade project, the relationship between the principal life cycle cost factors and each system feature is also mapped. The values derived from the application of this methodology enable the designer to select an optimized design concept from various concepts based on how the various proposed technical specifications and features and their relative importance meet the initial design requirements, the capital costs, life cycle costs and other desired outcomes to arrive at an overall optimum design concept selection.

In a preferred embodiment according to the present invention, there is provided a method of optimizing a design for a project having initially identified technical issues and generalized technical specifications addressing the technical issues and specific design features meeting overall project specifications, comprising the steps of determining a critical-to-quality value for each technical specification addressing each technical issue by weighting in importance each technical issue and each technical specification and combining the weightings to ascertain the relative importance of each technical specification in meeting the initially identified project technical issues, determining a technical merit value for each design feature addressing each technical specification by combining the critical-to-quality value for each technical specification and a weighting of the importance of each design feature thereby to ascertain the relative importance of each design feature in meeting the technical specifications and summing the technical merit values for the design features affording a measure of how well the design features meet the overall project technical issues.

In a further preferred embodiment according to the present invention, there is provided a method of optimizing a design concept from proposed multiple concepts for a project having initially identified technical issues wherein each concept includes generalized technical specifications addressing such issues and specific design features meeting overall project specifications; comprising the steps of, for each design concept, determining a critical-to-quality value for each technical specification addressing each technical issue by weighting in importance each technical issue and each technical specification and combining the weightings to ascertain the relative importance of each technical specification in meeting the initially identified project technical issues, for each design concept, determining a technical merit value for each design feature addressing each technical specification by combining the critical-to-quality value for each technical specification and a weighting of the importance of each design feature thereby to ascertain the relative importance of each design feature in meeting the technical specifications, summing the technical merit values for the design feature affording a measure of how well the design features meet the overall project technical issues and comparing the summed technical merit values for each design concept to determine an optimized design concept.

In a still further preferred embodiment according to the present invention, there is provided a method of optimizing a design concept for a project having initially identified technical issues and generalized technical specifications addressing the technical issues and specific design features meeting overall project specifications, comprising the steps of (a) weighting the technical issues by relative importance to provide a first importance factor, (b) identifying technical specifications required to address each technical issue, (c) weighting each technical specification based on relative importance for addressing each technical issue to provide a second importance factor, (d) combining the first and second factors to define a first value indicating the relative importance of each technical specification in meeting a corresponding technical issue, (e) summing the first values for each technical specification to provide a second value indicating the relative importance of each technical specification in meeting overall project technical issues, (f) identifying design features addressing corresponding technical specifications for the project, (g) weighting each of the design features by relative importance in meeting each technical specification to provide a third importance factor, (h) combining the first values and the third factors to define third values indicating the relative importance of the design features in meeting corresponding technical specifications, (i) summing the third values for each design feature to provide a fourth value representing a measure of how well each design feature meets the overall project technical specifications and (j) summing the fourth values to provide a fifth value representing technical merit of the design, the technical merit being a measure of how well the overall design features meet the overall project technical specifications.

The invention will now be described in greater detail by way of example, with reference to the drawings in which:
FIGURE 1 is a flowchart illustrating the methodology of a design optimization process in accordance with a preferred embodiment of the present invention;
FIGURE 2 illustrates a quality function deployment chart mapping the relationship between initially identified design requirements and technical specifications for meeting those requirements and their ranking of relative importance;
FIGURE 3 is a similar quality function deployment chart mapping the relationship between lower level design features for meeting the technical specifications used in the importance rankings of Figure 2; and
FIGURE 4 is a quality function deployment chart for use in selecting the optimized final design concept.

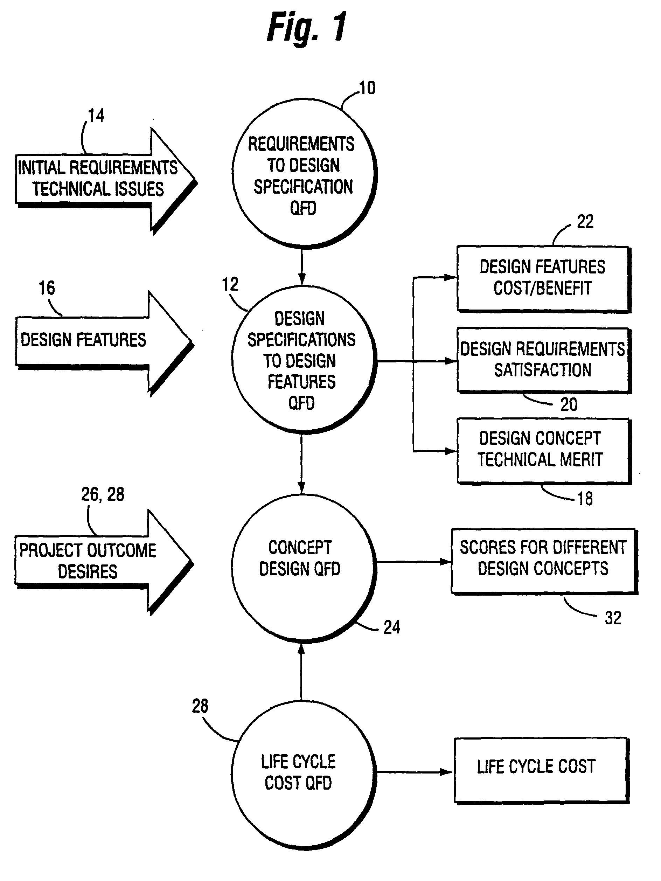

Referring now to the drawings, particularly to Figure 1, there is illustrated a flow chart employing a series of quality function deployment (QFD) tools 10 (represented by the circles in Figure 1). The QFD tools reflect various mapped relationships between project requirements and various specifications and features proposed to meet those requirements at different levels of the proposed overall design. In general, for each design concept proposed for meeting a particular design modification, upgrade or project, a series of rankings are developed from a high level to one or more lower levels for eventually selecting a particular design concept from multiple design concepts which best meets all of the project requirements.

Referring to Figure 1 as a representative example of the methodology of a preferred embodiment of the invention, a set of generalized initial design requirements or technical issues 14, are identified by a proponent of the project, e.g., a customer. A weighting factor is also developed, e.g., by the customer for each required generalized design requirement or technical issue. That is to say, the customer answers the question how important is an initially identified requirement or technical issue relative to other initial requirements or issues and assigns a weighting factor on a weighting scale to that issue.

Technical specifications addressing the generalized requirements or technical issues are then developed, by for example "brainstorming" or other similar techniques. Each of these specifications is then weighted in terms of relative importance in meeting each of the technical issues. By combining those weighted technical issues and specifications, an overall critical-to-quality (CTQ) value is ascertained for each specification and represents a measure of the relative importance of each specification in meeting the overall project technical issues. These CTQ values are developed in the quality function deployment (QFD) tool 10 of Figure 1.

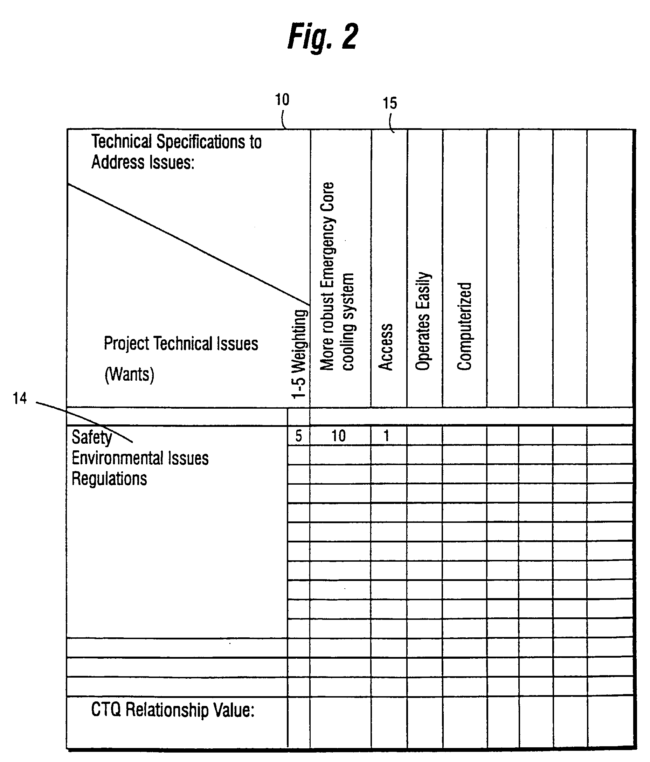

Figure 2 provides an example of how this process is used to develop the specific project technical requirements from the general requirements and technical issues. Referring to Figure 2, a project's generalized initial requirements, i.e., technical issues, are identified. For example, in a nuclear plant upgrade, the customer may wish to modernize in terms of improved safety, compliance with regulations, reduction in operating costs, etc. These are the initial general requirements identified by the customer. For example, the specific design specifications might be "More Robust Emergency Core Cooling System" to address the general need of "Improved Safety." The chart of Figure 2 illustrates a particular set of design specifications for meeting those customer needs.

In the chart of Figure 2, the customer's initial requirements are listed in the left-hand column under "Project Technical Issues." One or more first high-level technical specifications are identified for meeting each of those customer requirements and those specifications are listed across the top of the chart. Those specifications address how each of the customer requirements in the left column are proposed to be met. For example, to meet the customer's initial requirement of improving safety, a more robust core cooling system for the nuclear reactor could be provided. Additional access, easy operation, computerization of a safety system, etc., may comprise specifications 15 also addressing those safety issues. Other technical specifications would address the other customer requirements listed in the left column and would be listed along the top of the chart in Figure 2.

At a second and lower level, indicated by the QFD tool 12 in Figure 1, more particularized design features, represented at 16 in Figure 1, for meeting the proposed technical specifications are mapped in relation to the individual technical specifications previously mapped. By weighting each design feature, i.e., how important each design feature is in meeting the corresponding technical specification, and combining that weighting factor with the normalized CTQ value (the results of QFD tool 10 in Figure 1) for each technical specification, a technical merit value is assigned to each design feature which reflects the relative importance of each design feature in meeting the overall technical specifications. By summing the technical merit values, an overall design concept merit value is obtained. Also, by summing the combined values of relative importance for each design feature and the CTQ value for a particular technical specification, a design requirement's satisfaction value is obtained. Additionally, a cost-and-benefit ratio is obtained by weighting the cost for each design feature and combining this cost factor ranking with the technical merit value to provide a benefit-and-cost factor for each design feature. Additional summing provides a total benefit-and-cost ratio for the proposed design concept. This process is demonstrated in the QFD, Figure 2.

Other factors affecting the desired outcome are also weighted by the customer. For example, life cycle cost may be ranked and mapped for the various design features to ultimately determine which design concept is the optimal concept for meeting the overall project initial requirements or technical issues.

As a specific example of the methodology of the present invention, reference is made to an upgrade for a nuclear power plant. It will be appreciated, however, that the methodology of the present invention can be applied to any design optimization for any modification or upgrade to a capital investment project where the design modification or upgrade requires choices among different design concepts.

The present invention systematizes and breaks down those initial project requirements into a manageable organization of relevant information and creates product development criteria based on customer needs, which largely eliminates uncertainty involved in the project design and produces an organized ranking indicating how well each proposed concept meets the initial design requirements as compared with other proposed concepts.

It will be appreciated that the initial generalized customer requirements (technical issues) can be ranked in relative importance by the customer, i.e., those requirements can be weighted on a scale, for example, 1 to 5, with 5 being the highest ranking and indicating the highest degree of importance of that requirement relative to other initial requirements. Thus, a first importance factor is provided in the next column, i.e., the weighting column. In this example, the customer has weighted safety a 5 on a scale of 1 to 5. Similarly, the technical specifications listed across the top of the chart of Figure 2 can be ranked in terms of relative importance in meeting each particular requirement listed in the left column and thus provides a second importance factor. For example, a ranking of 1 to 10 might be used. Thus, if the customer indicates that a robust core cooling system is highly important for improving safety, a ranking of 10 would be assigned at the intersection of the row and column, If the customer considers access to the core to be of minimal importance to the safety requirement, a ranking of 1 might be assigned. Thus, each technical specification is ranked by relative importance in meeting each requirement in the left column. By combining these weighting factors, e.g., by multiplying them together, a first value at the intersection of each row and column is provided, indicating the relative importance of each technical specification in meeting a corresponding technical issue. Those first values can be summed vertically to provide for each technical specification a second value, i.e., a CTQ (critical-to-quality) value indicating the relative importance of each technical specification 15 in meeting overall project technical issues 14.

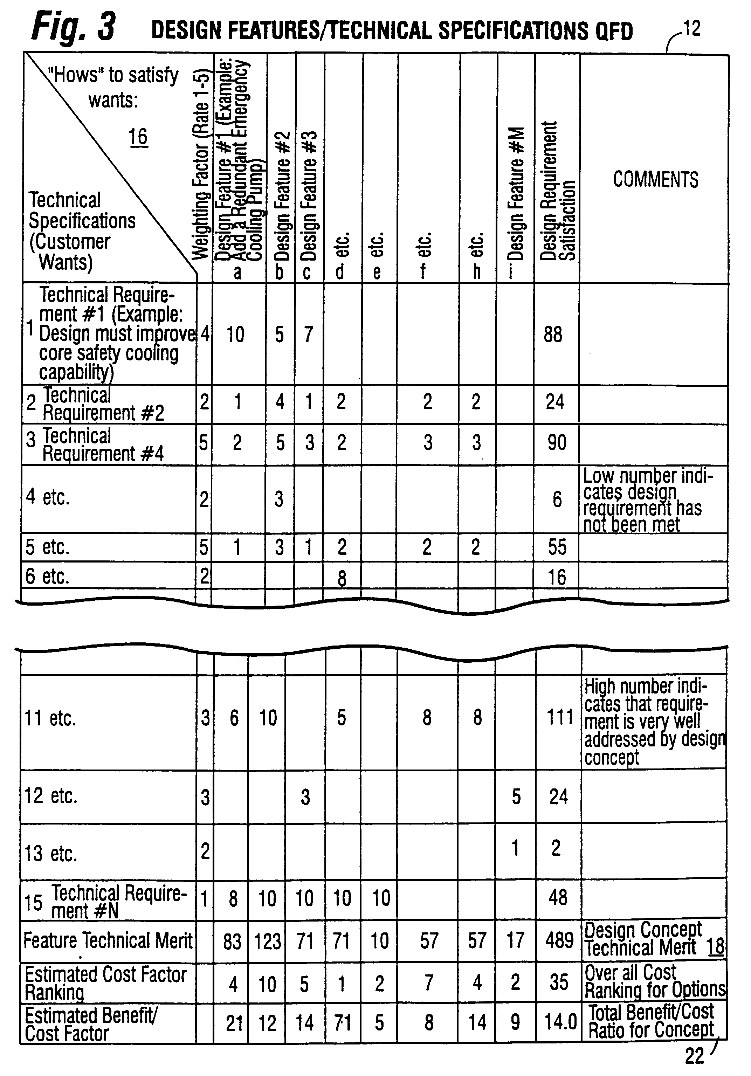

Referring to Figure 3, the chart maps at a lower level than the chart of Figure 2 the technical specifications 15 of Figure 2 against more particularized or more detailed design features required to meet each technical specification. Thus, in the chart of Figure 3, the technical specifications, corresponding to the technical specifications listed across the top of Chart 2, are listed in the left column. A weighting factor for each technical specification is listed in the second column and corresponds to normalized value of the CTQ value taken from the chart of Figure 2 on a scale of 1 to 5. Across the top of the chart of Figure 3, specific design features 16 are listed for meeting each of the technical specifications listed in the first column. In the particular example of an upgrade of a nuclear power plant, a redundant emergency cooling pump is listed across the top in Figure 3 as a representative design feature for meeting the requirements of the robust core cooling system set forth as the first item in the specifications column. Additional design features to meet technical specification #1 are listed across the top and are identified as design features #2, #3, etc. Additional design features are then listed across the top for meeting the requirements of each technical specification listed in the left-hand column. As in the previous chart, a weighting is applied to each of the design features based on their relative importance in meeting the requirements of each technical specification. Thus, a weighting factor, for example, on a scale of 1 to 10 may be utilized to provide a third importance factor. In the given example, it will be seen that the redundant emergency cooling pump is highly important in improving core safety cooling and is thus rated at 10. The next design feature #2 is not as important in meeting the core safety cooling requirement and is therefore ranked a 5. Each design feature is thus ranked for its relative importance to each technical specification.

The normalized CTQ values, reflecting the relative importance of the technical specifications to the initial technical issues, are combined with the rankings of the design features, e.g., the weightings are multiplied together to define a third value indicating the relative importance of the design feature in meeting the corresponding technical specification. Those third values are then summed vertically for each design feature to provide a fourth value representing a measure of how well each design feature meets the overall project technical specifications. For example, the design feature requiring a redundant emergency cooling pump, when the two weightings are combined, provides a third value at 40 which, when summed vertically with other third values for that design feature, affords an overall feature technical merit of 83. Thus, when each of the rankings of the design features in the columns are combined with the normalized CTQ value, a feature technical merit value, i.e., the fourth value, is obtained. By summing the feature technical merit values, i.e., the fourth values, across the chart, a fifth value, e.g., represented by the number 489, is given. This number represents the overall design concept technical merit and is indicated on the chart at 18. Also, by summing the combined weightings by row across the chart, there is provided a sixth value representing a measure of how well the overall design features meet each technical specification and is indicated on the chart at 18. This is an indication of a design requirement satisfaction. In the given example, the combined weightings for meeting the technical specification #1 is represented by the numeral 88, i.e., a combination of each of the rankings in the design features columns multiplied by the normalized CTQ value in the weighting column and summed. It will be appreciated that a low number in the design requirement satisfaction column indicates that the design requirement has not been met, while a high number indicates that the requirement has been very well addressed by the design concept.

Continuing to refer to the chart of Figure 3, a cost factor is assigned to each of the design features. That is, and for example, the redundant emergency cooling pump design feature may have a variable cost and this cost can be ranked on a scale. Thus, the cost for each of the design features are ranked and the overall cost ranking for the various design features can be ascertained. At the last line, a benefit and cost factor can be attributed to each design feature. This factor is provided by dividing the feature technical merit by the estimated cost factor ranking. By summing across the last row of the chart, a total benefit-and-cost ratio 22 for the particular design concept can be ascertained.

Referring to Figure 1, it will be appreciated that the Charts 2 and 3 represent the QFD tools 10 and 12 in the flowchart of Figure 1. The Design Concept Technical Merit, the Design Requirements Satisfaction and the Design Features Cost/Benefit are represented at 18, 20 and 22 in Figure 1, respectively, and developed by employing both QFD tools 10 and 12.

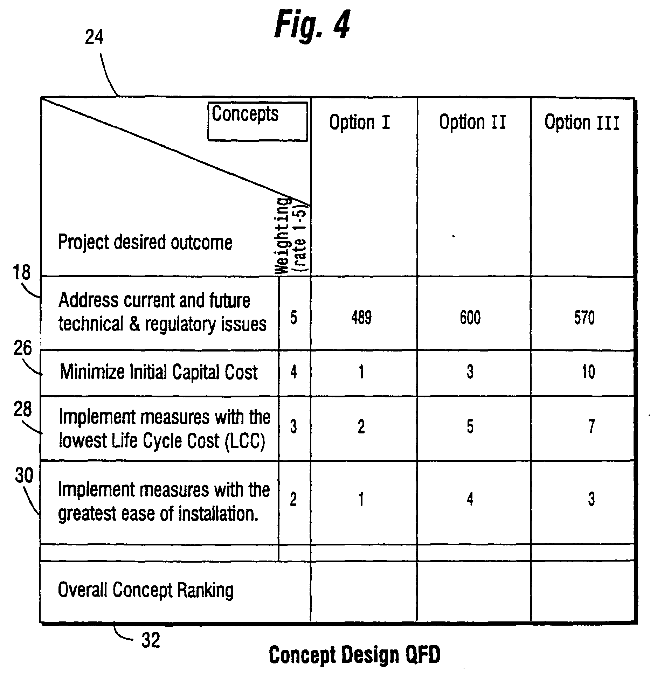

Referring to Figure 4, a Concept Decision QFD 24 is used. Various desired outcomes for the customer or project are identified and listed in the left-hand column. The first outcome represents the design concept technical merit value 18 obtained from the chart of Figure 3 under the first column labelled "Option 1." Option 1 represents a proposed design concept meeting the initial requirements of the customer as listed in the left column of Chart 2. Options 2 and 3 listed across the top represent different proposed design concepts for which design concept technical merit values have been obtained using the same methodology of QFD tools 10 and 12, i.e., drawing Figures 2-3. Those values are placed in the appropriate columns and the row adjacent the technical and regulatory issues listed in the first column.

Additional outcomes are also listed in the first column, e.g., minimization of initial capital costs 26, implement measures with lowest life cycle costs 28, implement measures with greatest ease of installation 30, etc. Each of these desired outcomes are weighted by the customer in the second column of Figure 4 in terms of relative importance to the customer. For example, the technical and regulatory issues have been weighted the highest, e.g., 5 on a scale of 1 to 5, with the other outcomes similarly weighted by the customer. Each of the other outcomes are likewise weighted in importance, for example, on a scale of 1 to 10, and those weightings are completed in the appropriate column/row section. The weighting factors are combined to provide an overall concept ranking 32 for each option, i.e., design concept.

## Claims

1. A method of optimizing a design for a project having initially identified technical issues (14) and generalized technical specifications (15) addressing the technical issues and specific design features meeting overall project specifications, comprising the steps of:
determining a critical-to-quality value for each technical specification (15) addressing each technical issue (14) by weighting in importance each technical issue and each technical specification and combining the weightings to ascertain the relative importance of each technical specification in meeting the initially identified project technical issues;
determining a technical merit value for each design feature (16) addressing each technical specification by combining said critical-to-quality value for each said technical specification and a weighting of the importance of each design feature thereby to ascertain the relative importance of each design feature in meeting said technical specifications; and
summing the technical merit values (18) for the design features affording a measure of how well the design features meet the overall project technical issues.

2. A method according to Claim 1 identifying a cost factor for each design feature and establishing a ratio (22) of cost and benefit for each design feature.

3. A method according to Claim 2 ascertaining a total ratio of benefits and costs for all design features.

4. A method of optimizing a design concept from proposed multiple concepts for a project having initially identified technical issues wherein each concept includes generalized technical specifications addressing such issues and specific design features meeting overall project specifications; comprising the steps of:
for each design concept, determining a critical-to-quality value for each technical specification (15) addressing each technical issue (14) by weighting in importance each technical issue and each technical specification and combining the weightings to ascertain the relative importance of each technical specification in meeting the initially identified project technical issues;
for each design concept, determining a technical merit value (18) for each design feature addressing each said technical specification by combining said critical-to-quality value for each technical specification and a weighting of the importance of each design feature thereby to ascertain the relative importance of each design feature in meeting said technical specifications;
summing the technical merit values for the design feature affording a measure of how well the design features meet the overall project technical issues; and
comparing the summed technical merit values for each design concept to determine an optimized design concept.

5. A method of optimizing a design concept for a project having initially identified technical issues (14) and generalized technical specifications (15) addressing the technical issues and specific design features meeting overall project specifications, comprising the steps of:
(a) weighting the technical issues by relative importance to provide a first importance factor;
(b) identifying technical specifications (15) required to address each technical issue;
(c) weighting each technical specification based on relative importance for addressing each technical issue to provide a second importance factor;
(d) combining said first and second factors to define a first value indicating the relative importance of each technical specification in meeting a corresponding technical issue;
(e) summing the first values for each technical specification to provide a second value (CTQ) indicating the relative importance of each said technical specification in meeting overall project technical issues;
(f) identifying design features (16) addressing corresponding technical specifications for the project;
(g) weighting each of the design features by relative importance in meeting each said technical specification to provide a third importance factor;
(h) combining the first values and said third factors to define third values indicating the relative importance of said design features in meeting corresponding technical specifications;
(i) summing the third values for each design feature to provide a fourth value representing a measure of how well each design feature meets the overall project technical specifications; and
(j) summing the fourth values to provide a fifth value representing technical merit of the design, said technical merit being a measure of how well the overall design features meet the overall project technical specifications.

6. A method according to Claim 5 including summing the third values for each technical feature to provide a sixth value representing a measure of how well the overall design features meet each technical specification.

7. A method according to Claim 5 including defining a cost factor for implementing each said design feature.

8. A method according to Claim 5 including determining a benefit-to-cost ratio using said fifth value and said cost factor for each design feature.

9. A method according to Claim 5 including summing the third values for each technical feature to provide a sixth value (18) representing a measure of how well the overall design features meet each technical specification, defining a cost factor for implementing each said design feature and determining a benefit-to-cost ratio (22) using said fifth value and said cost factor for each design feature.

10. A method according to Claim 5 including repeating steps (a) through (h) for a second design concept and comparing the technical merit of each design concept to derive an optimized design concept.
